(19) Europäisches Patentamt
European Patent Office
Office européen des brevets

(11) **EP 2 998 281 B1**

(12) **EUROPÄISCHE PATENTSCHRIFT**

(45) Veröffentlichungstag und Bekanntmachung des Hinweises auf die Patenterteilung:
**07.06.2017 Patentblatt 2017/23**

(51) Int Cl.:
***C04B 35/043*** *(2006.01)*    ***C04B 35/66*** *(2006.01)*

(21) Anmeldenummer: **14185380.4**

(22) Anmeldetag: **18.09.2014**

(54) **Feuerfester keramischer Versatz sowie ein feuerfestes keramisches Erzeugnis**

Rerfactory ceramic formulation and refractory ceramic product

Mélange de céramique réfractaire et produit céramique réfractaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.03.2016 Patentblatt 2016/12**

(73) Patentinhaber: **Refractory Intellectual Property GmbH & Co. KG**
**1100 Wien (AT)**

(72) Erfinder:
• **Gelbmann, Gerald**
**8700 Leoben (AT)**
• **Geith, Martin**
**8700 Leoben (AT)**
• **Kahr, Friedrich**
**8663 Veitsch (AT)**

(74) Vertreter: **Berkenbrink, Kai-Oliver**
**Patentanwälte Becker & Müller**
**Turmstrasse 22**
**40878 Ratingen (DE)**

(56) Entgegenhaltungen:
**EP-A1- 0 015 638      EP-A1- 0 248 171**
**EP-A1- 2 781 494      GB-A- 871 965**
**GB-A- 1 118 073      GB-A- 1 503 278**

• **CLAUDE ALLAIRE ET AL: "Basic Phosphate-Bonded Castables from Dolomitic-Magnesite Clinkers", JOURNAL OF THE AMERICAN CERAMIC SOCIETY, BLACKWELL PUBLISHING, MALDEN, MA, US, Bd. 72, Nr. 9, 1. September 1989 (1989-09-01), Seiten 1698-1703, XP002698454, ISSN: 0002-7820, DOI: 10.1111/J.1151-2916.1989.TB06305.X [gefunden am 2005-03-08]**

EP 2 998 281 B1

**Beschreibung**

Die Erfindung betrifft einen feuerfesten keramischen Versatz sowie ein feuerfestes keramisches Erzeugnis.

Feuerfeste keramische Produkte lassen sich in unterschiedliche Kategorien einteilen, beispielsweise in basische und nicht basische Produkte. Die Erfindung betrifft nur basische Produkte, und zwar einen Versatz und ein daraus hergestelltes Erzeugnis, dessen basisches Grundmaterial aus Magnesia besteht.

Aus der DE 44 03 869 C2 und der DE 198 59 372 C1 sind Versätze zur Herstellung basischer keramischer feuerfester Erzeugnisse bekannt. Neben dem basischen Grundmaterial bestehen die bekannten Produkte aus Spinellen (Hercynit, Galaxit, Jakobsit).

Mit einem feuerfesten keramischen Versatz wird bekanntermaßen eine Zusammensetzung aus einer oder mehreren Komponenten bezeichnet, durch die mittels eines keramischen Brandes ein feuerfestes keramisches Erzeugnis erstellbar ist. Der Begriff "feuerfestes keramisches Erzeugnis" im Sinne der Erfindung bezeichnet insbesondere keramische Erzeugnisse mit einer Einsatztemperatur von über 600°C und bevorzugt feuerfeste Werkstoffe gemäß DIN 5106, also Werkstoffe mit einem Kegelfallpunkt größer SK 17.

EP 0 248 171 A1 offenbart eine feuerfeste thixotrope Vibrations-Masse, die neben Sintermagnesit ferner Natriumpolyphosphat, Borsäure und Kalziumhydroxit umfasst. Der in GB 1 503 278 A offenbarte Versatz umfasst Sintermagnesia und Natriummetaphosphat. Claude Allaire et al ("Basic Phosphate-Bonded Castables from Dolomitic-Magnesite Clinkers"), JOURNAL OF THE AMERICAN CERAMIC SOCIETY, Bd. 72, Nr. 9, 01.09.1989, S. 1698 - 1703) beschreiben phosphatgebundene Gießmassen aus dolomitisch-magnesitischem Grundmaterial mit Phosphatbindern. In GB 1 118 073 A wird ein feuerfestes Grundmaterial in Form von kalziniertem Magnesit offenbart, welches neben Anteilen an Magnesia ferner Anteile an Manganoxid und Phosphat aufweist.

Geformte feuerfeste keramische Erzeugnisse sind beispielsweise in Form von feuerfesten Steinen bekannt.

Feuerfeste Steine werden in verschiedensten Aggregaten eingesetzt, insbesondere beispielsweise in wärmetechnischen Aggregaten der Metall-, Glas- oder Zementindustrie.

In der Zementindustrie werden feuerfeste Steine beispielsweise als sogenannte Zementdrehofensteine zur Zustellung von Zementdrehrohröfen eingesetzt. Zementdrehofensteine werden teilweise aus eisen- und kalkreichem Magnesiasinter, sogenanntem "Sinter 6" hergestellt. Aufgrund der starken mechanischen Belastungen, den Zementdrehofensteine im Einsatz in einem Zementdrehrohrofen ausgesetzt sind, benötigen sie sogenannte Flexibilisierer, die regelmäßig aus der Spinellgruppe ausgewählt sind, also insbesondere beispielsweise Spinell (echter Spinell, Magnesia-Alumina-Spinell), Hercynit (Ferro-Spinell) oder Galaxit (Mangan-Spinell). Da das Zusammenspiel dieser Rohstoffe im Zementdrehofenstein zu verhältnismäßig niedrigen Feuerfestigkeiten führt, beispielsweise mit einer Temperatur $T_0$ für das Druckerweichen unter 1.400°C, versucht man den Gehalt an Alumina ($Al_2O_3$) im Zementdrehofenstein möglichst niedrig zu halten. Dies gelingt beispielsweise durch den Einsatz von Hercynit. Der Einsatz von Hercynit hat den Vorteil, dass bereits durch eine Zugabe von 5 % Hercynit im Stein der Gehalt an Alumina im Erzeugnis auf verhältnismäßig niedrigem Niveau gehalten werden kann.

Vorteilhaft an der Verwendung von Hercynit ist ferner, dass durch den gleichzeitigen Einsatz von Hercynit und Spinell insbesondere auch eine hervorragende Korrosionsfestigkeit eines daraus hergestellten Steines erreicht werden kann, beispielsweise eine gute Beständigkeit des Steines gegen Sulfatkorrosion.

Höhere Gehalte von Hercynit und Spinell wären für das Praxisentsprechen durchaus vorteilhaft. Jedoch können feuerfeste keramische Steine, die aufgrund ihrer Rohstoffe einen verhältnismäßig hohen Anteil an Eisenoxid ($Fe_2O_3$) aufweisen, nur Anteile an Hercynit von maximal etwa 5 % aufweisen, soweit sie in mechanisch stark belasteten Bereichen eingesetzt werden sollen. Höhere Anteile an Hercynit würden die Temperatur für das Druckerweichen dieser Steine zu stark herabsetzen, womit die feuerfesten Eigenschaften dieser Steine damit nicht ausreichend für den Einsatz in mechanisch stark belasteten Bereichen wären. Aufgrund dieses beschränkten Umfanges, in dem Flexibilisierer gemäß dem Stand der Technik in Versätzen eingesetzt werden können, ist die Festigkeit von feuerfesten keramischen Erzeugnissen, die aus solchen Versätzen hergestellt sind, gegenüber sulfatischen Angriffen häufig mangelhaft.

Der $T_0$-Wert für das Druckerweichen bezeichnet den invarianten Punkt des Phasensystems der in dem feuerfesten Stein vorhandenen Phasen, also die Temperatur im jeweiligen Phasensystem der Steine, bei dem die ersten Schmelzphasen auftreten und die Feuerfestigkeit der Steine daher schlagartig zurückgeht. Bei auf Basis von Magnesia mit den weiteren Komponenten Hercynit und Spinell erstellten feuerfesten Steinen liegen im Stein insbesondere die Phasen Magnesia, Spinell, Hercynit und Dicalciumsilikat vor, wobei das CaO und $SiO_2$ des Dicalciumsilikates insbesondere über natürliche Verunreinigungen beziehungsweise Nebenbestandteile der Magnesia in den Versatz und damit in den daraus hergestellten Steinen eingetragen werden. Daneben kann als weitere Phase Ferrit im feuerfesten Stein vorliegen, wobei das Eisen des Ferrits insbesondere ebenfalls über eisenhaltige Verunreinigungen der Magnesia in den Versatz und damit in den daraus erstellten Steinen eingetragen sein kann; der Begriff "Ferrit" bezeichnet hierin neben Ferrit auch ferritische Mischkristalle.

Der invariante Punkt des Systems Magnesia-Spinell-Dicalciumsilikat liegt bei 1.417°C.

Soweit das CaO nicht vollständig mit $SiO_2$ abgesättigt werden kann, liegt als weitere Phase Calciumaluminat im Stein vor. Der invariante Punkt in dem dann vorliegenden Phasensystem Magnesia-Spinell-Dicalciumsilikat-Calciumaluminat liegt bei nur 1.325°C.

Um den invarianten Punkt bei einem aus den Komponenten Magnesia, Spinell und Hercynit hergestellten Stein möglichst nah an die Temperatur von 1.417°C heranzuführen, ist aus dem Stand der Technik bekannt, die chemische Zusammensetzung des Versatzes hinsichtlich des Anteils an $SiO_2$ durch die gezielte Zugabe von $SiO_2$ derart zu beeinflussen, dass der Anteil an CaO im Versatz vollständig durch $SiO_2$ abgesättigt wird und CaO und $SiO_2$ beim keramischen Brand möglichst vollständig zu Dicalciumsilikat miteinander reagieren. Eine vollständige Absättigung des CaO durch das $SiO_2$ ist insbesondere dann möglich, wenn der Molanteil von CaO im Versatz das Doppelte des Molanteils von $SiO_2$ beträgt.

Allerdings kann der invariante Punkt von 1.417°C im System Magnesia-Spinell-Dicalciumsilikat auch durch Eisenoxid abgesenkt werden. Bei einem auf Basis der Komponenten Magnesia, Spinell und Hercynit bestehenden Versatz stammt dieses Eisenoxid, das sich negativ auf den invarianten Punkt des Systems Magnesia-Spinell-Dicalciumsilikat auswirkt, insbesondere nicht aus der Hercynit-Komponente, sondern aus Verunreinigungen beziehungsweise Nebenbestandteilen der Magnesia-Komponente, da Magnesia regelmäßig Anteile an Eisenoxid ($Fe_2O_3$) aufweist. Der Eisenoxidanteil der Hercynit-Komponente wirkt sich insoweit in der Regel nicht nachteilig auf die feuerfesten Eigenschaften aus, da Eisenoxid im Hercynit stabil ist. Soweit der durch die Magnesia in den Versatz beziehungsweise den daraus hergestellten feuerfesten Stein eingetragene Anteil an Eisenoxid nicht über 3 % liegt, führt dies in der Regel nicht zu einer wesentlichen Absenkung des invarianten Punktes, da Eisenoxid in Anteilen bis zu etwa 3 % in der Magnesia lösbar ist. Soweit der Anteil an Eisenoxid aus der Magnesia im Versatz beziehungsweise dem daraus hergestellten Stein jedoch einen Anteil von 3 % übersteigt, führt dies zu einer merklichen Absenkung des invarianten Punktes eines aus einem solchen Versatz hergestellten feuerfesten Steines. Insbesondere ab einem Anteil von etwa 6 % Eisenoxid fällt der invariante Punkt in aller Regel erheblich ab.

Auch durch die Einstellung eines Molverhältnisses von CaO zu $SiO_2$ im Versatz von 2:1 kann eine solche Absenkung des invarianten Punktes aufgrund der Anwesenheit von Eisenoxid nicht verhindert werden.

Darüber hinaus kann der Anteil an CaO im Versatz, insbesondere auch der Anteil an CaO, der zum Absättigung durch $SiO_2$ in den Versatz eingetragen ist, die Hydratationsempfindlichkeit eines aus dem Versatz hergestellten feuerfesten keramischen Erzeugnisses vergrößern. So reagieren Anteile an MgO und CaO des Versatzes mit Wasser zu Magnesiumhydroxid ($Mg(OH)_2$) und Calciumhydroxid ($Ca(OH)_2$), wobei CaO wesentlich schneller hydratisiert und Anteile an CaO im feuerfesten Erzeugnis damit zu einer nur geringen Hydratationsbeständigkeit des Erzeugnisses führen können.

Der vorliegenden Erfindung liegt die Aufgabe zugrunde, einen feuerfesten keramischen Versatz auf Basis Magnesia zur Verfügung zu stellen, in dem CaO in Anteilen vorliegt, die bei einem keramischen Brand des Versatzes nicht vollständig durch den Anteil an $SiO_2$ im Versatz absättigbar sind, wobei aus diesem Versatz durch einen keramischen Brand ein feuerfestes geformtes keramisches Erzeugnis mit einer verbesserten Sulfatbeständigkeit sowie mit einer verringerten Hydratationsempfindlichkeit herstellbar ist, verglichen mit gattungsgemäßen Erzeugnissen aus dem Stand der Technik, und zwar insbesondere auch dann, wenn der Versatz Anteile an Eisenoxid, die nicht über den Flexibilisierer in den Versatz beziehungsweise den daraus hergestellten Stein eingebracht werden, über 3 % aufweist.

Eine weitere Aufgabe der Erfindung besteht darin, ein geformtes feuerfestes keramisches Erzeugnis zur Verfügung zu stellen, das aus einem solchen Versatz durch einen keramischen Brand hergestellt ist.

Zur Lösung wird erfindungsgemäß zur Verfügung gestellt ein feuerfester keramischer Versatz auf Basis Magnesia mit den Merkmalen nach Anspruch 1.

Die Erfindung beruht auf der überraschenden Erkenntnis, dass die Sulfatbeständigkeit eines geformten feuerfesten Erzeugnisses, das auf Basis eines Magnesia umfassenden Versatzes hergestellt ist, und bei dem das Molverhältnis von CaO zu $SiO_2$ im Versatz größer als 2 ist, verbessert und die Hydratationsempfindlichkeit des Erzeugnisses verringert wird, wenn der Versatz Phosphor umfasst und etwaige Anteile an Flexibilisierer in dem Versatz in einem Anteil unter 2 Masse-% in dem Versatz vorliegen. Ferner wurde völlig überraschend festgestellt, dass die Festigkeit eines aus dem erfindungsgemäßen Versatz hergestellten feuerfesten keramischen Erzeugnisses durch die erfindungsgemäß nur geringen Anteile oder auch durch die Abwesenheit von Flexibilisierer nicht oder nur geringfügig beeinflusst wird.

Unter einer "verbesserten Sulfatbeständigkeit" eines geformten feuerfesten Erzeugnisses wird hierin insbesondere der erhöhte Widerstand des Erzeugnisses gegenüber sulfatischen Angriffen beziehungsweise die Herabsetzung der Infiltrationsgeschwindigkeit von Sulfat im Erzeugnis verstanden.

Unter einer "verringerten Hydratationsempfindlichkeit" eines geformten feuerfesten Erzeugnisses wird hierin insbesondere die reduzierte Neigung des Erzeugnisses zur Hydratation beziehungsweise die verringerte Neigung des Erzeugnisses zur Bildung von Hydroxiden aus Komponenten des Erzeugnisses verstanden.

Da das Molverhältnis von CaO zu $SiO_2$ im Versatz größer als 2 ist, liegt freies CaO im Versatz vor, also CaO, das beim keramischen Brand des Versatzes nicht durch $SiO_2$ abgesättigt wird und mit diesem zu Dicalciumsilikat reagiert. Dieses freie CaO reagiert während des keramischen Brandes des Versatzes zumindest mit einem Teil des Phosphors, der über die Phosphor umfassende Komponente in den Versatz eingetragen ist. Insbesondere reagieren während des keramischen Brandes des Versatzes der Phosphor sowie das CaO zu Tricalciumphosphat und im übrigen Phosphor, CaO und $SiO_2$ zu Calcium-Silikat-Phosphat-Mischkristall.

Überraschenderweise hat sich erfindungsgemäß nunmehr herausgestellt, dass sich durch die Anwesenheit von Phosphor im Versatz, die mit der Bildung der vorgenannten Phasen während des keramischen Brandes des Versatzes einhergeht, die Sulfatbeständigkeit eines aus dem erfindungsgemäßen Versatz gebildeten feuerfesten geformten Erzeugnisses verbessert und dessen Hydratationsempfindlichkeit verringert wird.

Die Erfinder vermuten, dass beim Brand des Versatzes entstehende Reaktionsprodukte die Sulfatinfiltration in das durch den Brand hergestellte keramische Erzeugnis verlangsamen und die Sulfatbeständigkeit des Erzeugnisses hierdurch verbessert wird. Hinsichtlich der verbesserten Hydratationsempfindlichkeit eines aus dem erfindungsgemäßen Versatz hergestellten Erzeugnisses wird vermutet, dass diese dadurch zustande kommt, dass freies CaO mit Phosphor und gegebenenfalls weiteren Komponenten des Versatzes während des Brandes reagiert, so dass im Erzeugnis verringerte Anteile an CaO hydroxieren können. Inwieweit sich in beiden Fällen der Umstand positiv auf die Sulfatbeständigkeit und Hydratationsbeständigkeit auswirkt, dass Flexibilisierer, insbesondere die hierin beschriebenen Flexibilisierer, nicht oder nur in geringen Mengen unter 2 Masse-% im Versatz vorhanden sind, konnte noch nicht im Einzelnen geklärt werden.

Es hat sich jedoch herausgestellt, dass das System sensibel auf weitere Komponenten, also Komponenten neben Magnesia, Flexibilisierer unter 2 Masse-% und wenigstens einer Phosphor umfassenden Komponente, die im Versatz vorliegen, reagieren kann, zumindest soweit diese nicht in unerheblichen Anteilen im Versatz vorliegen.

Als überraschend hat es sich insbesondere auch erwiesen, dass durch die Anwesenheit der Phosphor umfassenden Komponente im Versatz ein Absinken des invarianten Punktes, insbesondere wenn der Versatz beziehungsweise das daraus erstellte Erzeugnis einen nicht über die den wenigstens einen Flexibilisierers eingetragenen Anteil von Eisenoxid über 3 % aufweisen, nicht nur verhindert, sondern auch eine Erhöhung des invarianten Punkte erreicht werden kann.

Bevorzugt liegt die Phosphor umfassende Komponente in solchen Anteilen im Versatz vor, dass der Phosphor und der nicht durch $SiO_2$ absättigbare Anteil an CaO im Versatz weitgehend oder vollständig miteinander reagieren, so dass im keramischen Erzeugnis, das durch einen Brand des erfindungsgemäßen Versatzes hergestellt ist, keine oder nur geringe Anteile an CaO oder Phosphor vorliegen, die nicht miteinander oder dem Anteil an $SiO_2$ im Versatz reagiert haben.

Phosphat kann grundsätzlich über eine beliebige Komponenten in den Versatz eingebracht werden bzw. in beliebiger Form im Versatz vorliegen. Insofern kann es sich bei der Phosphor umfassenden Komponente grundsätzlich um eine beliebige, Phosphor umfassende Substanz handeln.

Bei der wenigstens einen, Phosphor umfassenden Komponente kann es sich um eine oder unterschiedliche Komponenten handeln, die Phosphor umfassen. Bei der Phosphor umfassenden Komponente kann es sich auch um elementares Phosphor handeln. Beispielsweise kann es sich bei der Phosphor umfassenden Komponente um eine oder mehrere der folgenden Komponenten handeln: Phosphor, Phosphoroxid, Phosphorsäure oder Phosphat. Soweit die Phosphor umfassende Komponente als Phosphoroxid vorliegt, kann diese insbesondere in Form von Diphosphorpentoxid ($P_2O_5$) vorliegen. Soweit die Phosphor umfassende Komponente als Phosphorsäure vorliegt, kann diese insbesondere in Form von Ortho-Phosphorsäure ($H_3PO_4$) vorliegen. Soweit die Phosphor umfassende Komponente in Form von Phosphat vorliegt, kann diese insbesondere in Form wenigstens eines der folgenden Phosphate vorliegen: Natrium-Hexamethaphosphat oder Aluminium-Methaphosphat.

Hierin angegebene Anteile an "Phosphor" im erfindungsgemäßen Versatz beziehungsweise dem daraus hergestellten Erzeugnis sind stets als Anteile in Form von Diphosphorpentoxid ($P_2O_5$) angegeben.

Im übrigen sind hierin gemachte %-Angaben, soweit im Einzelfall nicht anders angegeben, jeweils Anteile an Masse-% bezogen auf die Gesamtmasse des erfindungsgemäßen Versatzes beziehungsweise die Gesamtmasse des erfindungsgemäßen feuerfesten Erzeugnisses.

Erfindungsgemäß kann vorgesehen sein, die Phosphor umfassende Komponente in solchen Anteilen im Versatz vorzusehen, dass der Anteil an Phosphor sowie der Anteil an CaO in dem aus dem erfindungsgemäßen Versatz gebrannten Erzeugnis, also nach dem keramischen Brand des erfindungsgemäßen Versatzes, die nicht miteinander beziehungsweise mit dem Anteil an $SiO_2$ im Versatz reagiert haben, jeweils bevorzugt nicht über 0,5 % liegt, also beispielsweise auch nicht über 0,4 %, 0,3 %, 0,2 % oder 0,1 %.

Um die notwendige Menge an Phosphor - also gemäß der hierin gewählten Nomenklatur die notwendige Menge an Diphosphorpentoxid - im erfindungsgemäßen Versatz bestimmen zu können, die notwendig ist, das freie CaO im Versatz vollständig durch Phosphor zu binden, also insbesondere mit diesem zu Tricalciumphosphat oder zusammen mit dem $SiO_2$ zu Calcium-Silikat-Phosphat-Mischkristall zu reagieren, kann die hierzu notwendige ideale Menge an Phosphor im Versatz nach der folgenden Formel bestimmt werden:

$$P_{2}O_{5\ ideal}\ [\%] = (CaO_{frei}) \cdot \frac{b}{a} \qquad (I)$$

wobei $CaO_{frei}$ den freien Anteil an CaO im Versatz in Masse-% angibt, der nach der folgenden Formel bestimmbar ist:

$$CaO_{frei} = x - \frac{2 \cdot y \cdot c}{s} \qquad (II)$$

mit x = Anteil an CaO im Versatz [%]
y = Gehalt an $SiO_2$ im Versatz [%]
c = Molgewicht von CaO [g/Mol] = 56 g/Mol
s = Molgewicht von $SiO_2$ [g/Mol] = 60,1 g/Mol
a = Anteil an CaO in Tricalciumphosphat [%] = 54,2 %
b = Anteil an $P_2O_5$ in Tricalciumphosphat [%] = 45,8 %.

Es ist vorgesehen, dass der Massenanteil an Phosphor im Versatz höchstens 30 %, also beispielsweise auch höchstens 20 % oder 10 % über oder unter dem sich gemäß der vorstehenden Formel (I) ergebenden idealen Wert für den Massenanteil an Phosphor im Versatz ergibt, wobei die vorgenannten %-Angaben jeweils bezogen sind auf den sich gemäß Formel (I) ergebenden idealen Anteil an Phosphor im Versatz.

Die Anteile an CaO und/oder $SiO_2$ können insbesondere als Nebenbestandteile beziehungsweise Verunreinigungen aus den Haupt-Komponenten des erfindungsgemäßen Versatzes, also insbesondere Magnesia, in den Versatz eingebracht sein. Insbesondere weist Magnesia regelmäßig CaO und $SiO_2$ als Nebenbestandteil beziehungsweise Verunreinigung auf, so dass CaO und $SiO_2$ insbesondere durch die Magnesia-Komponente in den erfindungsgemäßen Versatz eingebracht sein können. Kumulativ oder alternativ können CaO und/oder $SiO_2$ jedoch auch nicht als Nebenbestandteile oder Verunreinigungen der Haupt-Komponenten, sondern gezielt, insbesondere über CaObeziehungsweise $SiO_2$-haltige Komponenten in den erfindungsgemäßen Versatz eingebracht sein. Insofern kann CaO beispielsweise über Kalkstein und/oder Dolomit und $SiO_2$ beispielsweise über Quarz oder Kieselsäure in den Versatz eingebracht sein.

In jedem Fall liegt der Molanteil an CaO im Versatz mehr als doppelt so hoch wie der Molanteil an $SiO_2$ im Versatz.

Erfindungsgemäß kann vorgesehen sein, dass der Massenanteil an CaO, bezogen auf die Gesamtmasse des Versatzes, im Bereich von 0,2 bis 8 Masse-% liegt.

Insofern kann beispielsweise vorgesehen sein, dass der Massenanteil an CaO im Versatz bei wenigstens 0,2 %, 0,3 %, 0,4 %, 0,5 %, 0,6 %, 0,7 % oder 0,8 % liegt. Ferner kann beispielsweise vorgesehen sein, dass der Massenanteil an CaO im Versatz bei höchstens 8 %, 7 %, 6 %, 5 %, 4 %, 3 %, 2,8 %, 2,5 %, 2,4 %, 2,3 %, 2,2 %, 2,1 % oder 2,0 % liegt.

Es kann vorgesehen sein, dass der Massenanteil an $SiO_2$ im Versatz, bezogen auf die Gesamtmasse des Versatzes, im Bereich von 0,05 bis 3 Masse-% liegt.

Insofern kann der Massenanteil an $SiO_2$ im Versatz beispielsweise bei wenigstens 0,05 %, 0,07 %, 0,1 %, 0,15 %, 0,2 %, 0,25 %, 0,3 %, 0,35 % oder 0,4 % liegen. Ferner kann beispielsweise vorgesehen sein, dass der Massenanteil an $SiO_2$ im Versatz bei höchstens 3 %, 2 %, 1,8 %, 1,5 %, 1,4 %, 1,3 %, 1,2 %, 1,1 % oder 1,0 % liegt.

Das Verhältnis der Molanteile von CaO zu $SiO_2$ im Versatz, insbesondere also beispielsweise auch das Verhältnis der Molanteile von CaO zu $SiO_2$ in der Magnesia-Komponente des Versatzes, soweit CaO und $SiO_2$ als Nebenbestandteile beziehungsweise Verunreinigungen der Magnesia in dem Versatz eingetragen werden, kann insbesondere im Bereich von größer 2 bis 10 liegen, beispielsweise auch im Bereich von größer 2 bis 6. Aufgrund dieses Wertes der Molanteile von CaO zu $SiO_2$ zueinander und der oben bezeichneten, absoluten Massenanteile an CaO und $SiO_2$ im Versatz, kann der Massenanteil an Phosphor im Versatz, berechnet als $P_2O_5$, beispielsweise bei höchstens 5 % liegen, also beispielsweise auch bei höchstens 4 %, 3 %, 2 %, 1,8 %, 1,7 %, 1,6 %, 1,5 %, 1,4 %, 1,3 %, 1, 2 %, 1,1 % oder 1 %. Beispielsweise kann der Massenanteil an Phosphor im Versatz beispielsweise auch wenigstens 0,1 % betragen, also beispielsweise auch wenigstens 0,2 %, 0,3 %, 0,4 % oder 0,5 %.

Die Phosphor umfassende Komponente kann demnach in solchen Massenanteilen im Versatz vorgesehen sein, dass Phosphor in den hierin gemachten Anteilen im Versatz vorliegt.

Der Massenanteil an Eisenoxid im Versatz, insbesondere der Massenanteil an $Fe_2O_3$, der nicht in Form beziehungsweise als Bestandteil eines eisenhaltigen Flexibilisierers im Versatz vorliegt - insbesondere beispielsweise in Form eines eisenhaltigen Flexibilisierers aus der Spinellgruppe, beispielsweise als Bestandteil von Hercynit oder Jakobsit - kann bevorzugt bei über 3 % liegen, bezogen auf die Gesamtmasse des Versatzes. Demnach kann der Massenanteil an Eisenoxid im Versatz, der nicht in Form eines eisenhaltigen Flexibilisierers im Versatz vorliegt, beispielsweise auch über 4 %, 5 %, 5,5 %, 6 %, 6,5 % oder 7 % liegen. Beispielsweise kann der Massenanteil an Eisenoxid, insbesondere wiederum in Form von $Fe_2O_3$, der nicht in Form eines eisenhaltigen Flexibilisierers im Versatz vorliegt, höchstens in Anteilen von 15 % im Versatz vorliegen, also beispielsweise auch in Anteilen von höchstens 14 %, 13 %, 12 %, 11 %, 10 %, 9 %, 8,5 % oder 8 %. Besonders bevorzugt kann der Massenanteil an Eisenoxid, der nicht in Form eines eisenhaltigen Flexibilisierers im Versatz vorliegt, in Anteilen zwischen 3 und 10 % im Versatz vorliegen.

Die Magnesia-Komponente liegt in Form von Schmelzmagnesia oder Sintermagnesia im Versatz vor, bevorzugt in Form von Sintermagnesia.

Die Magnesia-Komponente kann beispielsweise in Massenanteilen im Bereich von 70 bis 97 % im Versatz vorliegen. Die Magnesia-Komponente liegt in Anteilen von wenigstens 70 % im Versatz vor, also beispielsweise auch in Anteilen von wenigstens 72 %, 74 %, 76 %, 78 %, 80 %, 81 %, 82 %, 83 %, 84 % oder 85 %. Beispielsweise kann Magnesia in Massenanteilen von höchstens 97 % im Versatz vorliegen, also beispielsweise auch in Anteilen von höchstens 95 %, 93 %, 92 %, 91 % oder 90 %.

Da Magnesia regelmäßig Eisenoxid, insbesondere $Fe_2O_3$, als Nebenbestandteil beziehungsweise natürliche Verunreinigung umfasst, kann die Magnesia-Komponente insbesondere auch eine Eisenoxid umfassende Komponente sein, so dass ein Eisenoxidanteil des erfindungsgemäßen Versatzes, der nicht über die den wenigstens einen Flexibilisierers in den Versatz eingebracht ist, insbesondere über die Magnesia in den Versatz eingebracht sein kann.

Aufgrund des oben bezeichneten Phänomens, wonach Eisenoxidanteile über 3 %, die nicht in Form eines eisenhaltigen Flexibilisierers, insbesondere eines eisenhaltigen Flexibilisierers aus der Spinellgruppe vorliegen, in einem Versatz nach dem Stand der Technik den invarianten Punkt des Phasensystems eines aus dem Versatz hergestellten Steines erniedrigen können, ist man bei Versätzen nach dem Stand der Technik bestrebt, den Anteil an Eisenoxid im Versatz möglichst gering zu halten beziehungsweise möglichst eisenoxidarme Magnesia zu verwenden. Nachdem erfindungsgemäß festgestellt wurde, dass durch die Anwesenheit von Phosphor in gattungsgemäßen Versätzen der invariante Punkt durch die gleichzeitige Anwesenheit von Eisenoxid im Versatz, der nicht in Form eines eisenhaltigen Flexibilisierers vorliegt, sogar erhöht werden kann, kann erfindungsgemäß gezielt vorgesehen sein, eisenoxidreiche Magnesia als Komponente einzusetzen, beispielsweise Magnesia mit einem Massenanteil an Eisenoxid im Bereich von 3 bis 15 Masse-%, bezogen auf die Masse der Magnesia. Insofern kann beispielsweise auch vorgesehen sein, dass im erfindungsgemäßen Versatz eine Magnesia mit einem Massenanteil an Eisenoxid, jeweils bezogen auf die Masse der Magnesia, von wenigstens 3 %, also beispielsweise auch von wenigstens 3,5 %, 4 %, 4,5 % oder 5 % vorliegt. Ferner kann der Massenanteil an Eisenoxid in der Magnesia, wiederum bezogen auf die Masse der Magnesia, höchstens 15 Masse-%, also beispielsweise auch höchstens 13 %, 12 %, 11 %, 10 %, 9 %, 8 %, 7 % oder 6 % betragen.

Nach einer Ausführungsform ist vorgesehen, mehrere unterschiedliche Magnesia im Versatz als Magnesia-Komponente vorzusehen, insbesondere beispielsweise, um die vorgenannten Massenanteile an Eisenoxid im Versatz, die nicht in Form eines eisenhaltigen Flexibilisierers im Versatz vorliegen, zu erreichen; in Summe können die unterschiedlichen Magnesia daher die vorgenannten Anteile an Eisenoxid aufweisen. Die vorstehenden Angaben über die Massenanteile an Magnesia im Versatz, die Anteile an Eisenoxid im Versatz, die durch die Magnesia in den Versatz eingebracht werden, sowie die Anteile an Eisenoxid in der Magnesia gelten daher bei mehreren unterschiedlichen Magnesia für die Gesamtmasse aus diesen unterschiedlichen Magnesia.

Magnesia kann im erfindungsgemäßen Versatz insbesondere auch die Komponente sein, über die CaO und $SiO_2$ in den Versatz eingebracht werden, da Magnesia regelmäßig auch CaO und $SiO_2$ als Nebenbestandteile beziehungsweise Verunreinigungen umfasst. Insofern kann im Versatz bevorzugt eine Magnesia vorliegen, bei der die Molanteile von CaO zu $SiO_2$ größer 2 sind. Beispielsweise können auch wiederum unterschiedliche Magnesia mit unterschiedlichen Anteilen beziehungsweise Verhältnissen von CaO zu $SiO_2$ im Versatz vorliegen, so dass diese in Summe wiederum ein Molanteil von CaO zu $SiO_2$ größer 2 aufweisen. Das Molverhältnis von CaO zu $SiO_2$ in der Magnesia-Komponente des Versatzes liegt bevorzugt über 2, also beispielsweise auch über 2,2 über 2,4 über 2,6 über 2,8 oder über 3. Das Molverhältnis von CaO zu $SiO_2$ in der Magnesia-Komponente kann beispielsweise bei höchstens 10 liegen, also beispielsweise bei höchstens 9, 8, 7, 6, 5 oder höchstens 4. Sofern mehrere unterschiedliche Magnesia im Versatz vorliegen, gelten diese Werte für die Gesamtmasse der unterschiedlichen Magnesia.

Der Massenanteil an CaO in der Magnesia kann beispielsweise bei wenigstens 0,5 Masse-% liegen, bezogen auf die Gesamtmasse der Magnesia, also beispielsweise auch bei wenigstens 1 %, 2 % oder 3 %. Beispielsweise kann der Anteil an CaO in der Magnesia, bezogen auf die Gesamtmasse der Magnesia, bei höchstens 10 Masse-% liegen, also beispielsweise auch bei höchstens 9 %, 8 %, 7 %, 6 %, 5 % oder 4 %.

Der Massenanteil an $SiO_2$ in der Magnesia kann beispielsweise bei wenigstens 0,1 Masse-% liegen, bezogen auf die Gesamtmasse der Magnesia, also beispielsweise auch bei wenigstens 0,2 %, 0,3 %, 0,4 %, 0,5 %, 0,6 % oder 0,7 %. Beispielsweise kann der Massenanteil an $SiO_2$ in der Magnesia, bezogen auf die Gesamtmasse der Magnesia, bei höchstens 3 Masse-% liegen, also beispielsweise auch bei höchstens 2,5 %, 2,3 %, 2 %, 1,8 % oder 1,5 %. Sofern wiederum mehrere unterschiedliche Magnesia eingesetzt werden sollten, gelten die vorgenannten Massenanteile an CaO und $SiO_2$ wiederum für die Gesamtmasse der unterschiedlichen Magnesia.

Bei der Komponente oder den Komponenten in Form des wenigstens einen Flexibilisierers handelt es sich um einen oder mehrere verschiedene Flexibilisierer. Bei einem Flexibilisierer handelt es sich, wie zuvor ausgeführt, um eine Substanz, durch den die Sprödigkeit von feuerfesten Erzeugnissen auf Basis von Magnesia reduziert beziehungsweise deren Flexibilität erhöht werden kann. Entsprechende Substanzen sind aus dem Stand der Technik insbesondere in Form von Mineralien beziehungsweise Komponenten aus der Spinellgruppe bekannt.

Der oder die Flexibilisierer liegen ausschließlich in Form von Komponenten aus der Spinellgruppe vor, nämlich in Form eines oder mehrerer der folgenden Komponenten: Spinell, Hercynit, Galaxit oder Jakobsit.

Der oder die Flexibilisierer in Form von Spinell, Hercynit, Galaxit oder Jakobsit liegen in Anteilen unter 2 Masse-% im Versatz vor, also beispielsweise auch in Anteilen unter 1,8 Masse-%, 1,6 Masse-%, 1,4 Masse-%, 1,2 Masse-%, 1,0 Masse-%, 0,8 Masse-%, 0,7 Masse-%, 0,6 Masse-% oder unter 0,5 Masse-%. Die Anteile an Flexibilisierer können über 0,1 Masse-% vorliegen, also beispielsweise auch über 0,2 Masse-%, 0,3 Masse-% oder über 0,4 Masse-%.

Bei einem Flexibilisierer in Form von Spinell handelt es sich um einen echten Spinell, also einen Magnesia-Spinell ($MgO \cdot Al_2O_3$, $MgAl_2O_4$). Beispielsweise kann Spinell in Massenanteilen im Bereich von 0,1 bis unter 2 % im Versatz vorliegen, also beispielsweise in Anteilen von wenigstens 0,2 %, 0,3 %, 0,4 %, 0,5 %, 0,6 %, 0,7 %, 0,8 % oder 0,9 %. Ferner kann Spinell beispielsweise in Massenanteilen von höchstens 2 % im Versatz vorliegen, also beispielsweise auch in Anteilen von höchstens 1,9 %, 1,8 %, 1,7 %, 1,6 %, 1,5 %, 1,4 %, 1,3 %, 1,2 % oder 1,1 %.

Bei Hercynit, der als Komponente in Form eines Flexibilisierers im erfindungsgemäßen Versatz vorliegen kann, handelt es sich um einen Ferro-Spinell ($FeO \cdot Al_2O_3$, $FeAl_2O_4$).

Bei Jakobsit, der ebenfalls als Komponente in Form eines Flexibilisierers im erfindungsgemäßen Versatz vorliegen kann, handelt es sich um einen Ferrit-Spinell ($Mn^{2+}$, $Fe^{2+}$, $Mg^{2+}$) ($Fe^{3+}$, $Mn^{3+}$)$_2O_4$.

Galaxit, der ebenfalls als Komponente in Form eines Flexibilisierers im erfindungsgemäßen Versatz vorliegen kann, ist ein Mangan-Spinell ($MnO \cdot Al_2O_3$, $MnAl_2O_4$).

Hercynit, Galaxit und Jakobsit können beispielsweise jeweils in Massenanteilen im Bereich von 0,1 bis unter 2 % im Versatz vorliegen, bezogen auf die Gesamtmasse des Versatzes. Demnach können diese Substanzen beispielsweise jeweils in Massenanteilen von wenigstens 0,1 %, 0,2 %, 0,3 %, 0,4 % oder 0,5 % im Versatz vorliegen. Beispielsweise können diese Substanzen jeweils in Massenanteilen von höchstens 2 % im Versatz vorliegen, so beispielsweise auch jeweils in Massenanteilen von höchstens 1,9 %, 1,8 %, 1,7 %, 1,5 %, 1,6 % oder 1,5 %.

Nach einer besonders bevorzugten Ausführungsform umfasst der Versatz ausschließlich Flexibilisierer in Form von Spinell und Hercynit.

Die Komponenten des erfindungsgemäßen Versatzes, insbesondere Magnesia und Flexibilisierer, können mit einer Korngröße von höchstens 10 mm im Versatz vorliegen, besonders bevorzugt mit einer Korngröße von höchstens 9 mm, 8 mm, 7 mm, 6 mm oder 5 mm.

Beispielsweise kann die Magnesia-Komponente die folgenden Massenanteile im Bereich der folgenden Korngrößen aufweisen, jeweils bezogen auf die Gesamtmasse an Magnesia im Versatz:

- > 3 mm bis 10 mm oder > 3 mm bis 5 mm: 6 bis 13 %,
- > 1 mm bis 3 mm: 20 bis 35 %,
- > 0 mm bis 1 mm: 40 bis 80 %, insbesondere 50 bis 70 %.

Nach einer Ausführungsform ist vorgesehen, dass der Versatz neben den Komponenten Magnesia, Flexibilisierer und einer Phosphor umfassenden Komponente keine oder nur einen geringen Anteil an weiteren Komponenten aufweist, da der Versatz, wie oben ausgeführt, auf weitere Komponenten sensibel reagieren kann. Nach einer Ausführungsform ist vorgesehen, dass der Versatz neben den Komponenten Magnesia, Flexibilisierer und einer Phosphor umfassenden Komponente weitere Komponenten in einem Massenanteil von unter 10 % aufweist, also beispielsweise auch von unter 8 %, 6 %, 5 %, 4 %, 3 %, 2 % oder unter 1 %, jeweils bezogen auf die Gesamtmasse des Versatzes.

Beispielsweise kann vorgesehen sein, dass der Versatz als weitere Komponente eine $SiO_2$ umfassende Komponente, beispielsweise Quarz oder einen sonstigen $SiO_2$-Träger, für die Einstellung des Verhältnisses der Molanteile von CaO zu $SiO_2$ im Versatz aufweist. Beispielsweise kann eine solche, $SiO_2$ umfassende Komponente, in Massenanteilen von bis zu 3 %, also beispielsweise auch in Massenanteilen von bis zu 2 % oder bis zu 1 % im Versatz vorhanden sein.

Ferner können beispielsweise die folgenden weiteren Komponenten in den wie folgt angegebenen Massenanteilen maximal im Versatz vorhanden sein, jeweils bezogen auf die Gesamtmasse des Versatzes:

- $Al_2O_3$, soweit nicht als Spinell beziehungsweise in Form von $MgO \cdot Al_2O_3$: maximal 5 %, 4 %, 3 %, 2 %, 1 %, 0,5 %,
- $Cr_2O_3$: maximal 3 %, 2 %, 1 %, 0,5 %,
- $TiO_2$: maximal 3 %, 2 %, 1 %, 0,5 %,
- $ZrO_2$: maximal 3 %, 2 %, 1 %, 0,5 %,
- MnO: maximal 3 %, 2 %, 1 %, 0,5 %,
- C: maximal 3 %, 2 %, 1 %, 0,5 %,
- $B_2O_3$: maximal 1 %, 0,5 %,
- $Na_2O$: maximal 1 %, 0,5 %,

- $K_2O$: maximal 1 %, 0,5 %.

Soweit hierin Bezug genommen wird auf die "Gesamtmasse des Versatzes" bezieht sich dies auf die Gesamtmasse des nicht angemachten Versatzes, also des erfindungsgemäßen Versatzes, der nicht mit einem Bindemittel angemacht ist.

Gegenstand der Erfindung ist ferner ein geformtes feuerfestes keramisches Erzeugnis, das bevorzugt aus dem erfindungsgemäßen Versatz durch einen keramischen Brand hergestellt ist.

Bei dem erfindungsgemäßen geformten feuerfesten keramischen Erzeugnis kann es sich insbesondere um ein geformtes feuerfestes keramisches Erzeugnis in Form eines feuerfesten Steines handeln.

Zur Herstellung eines geformten feuerfesten keramischen Erzeugnisses aus dem erfindungsgemäßen Versatz kann der Fachmann auf die hierzu aus dem Stand der Technik bekannten Verfahren zur Herstellung von solchen Erzeugnissen aus gattungsgemäßen Versätzen zurückgreifen, da aus dem erfindungsgemäßen Versatz - trotz der Phosphor umfassenden Komponente - in gleicher Weise wie aus gattungsgemäßen Versätzen ohne eine solche Phosphor umfassende Komponente ein geformtes feuerfestes keramisches Erzeugnis herstellbar ist.

Der Fachmann kann insoweit aus die aus dem Stand der Technik bekannten Verfahren und Technologien zur Herstellung eines geformten feuerfesten keramischen Erzeugnisses aus dem erfindungsgemäßen Versatz zurückgreifen.

Beispielsweise kann zur Herstellung eines geformten feuerfesten keramischen Erzeugnisses (nachfolgend auch als "feuerfester Stein" bezeichnet) aus dem erfindungsgemäßen Versatz zunächst ein erfindungsgemäßer Versatz zur Verfügung gestellt werden.

Der erfindungsgemäße Versatz kann zur Erzeugung eines homogenen Gemenges gemischt werden, beispielsweise durch eine geeignete Mischvorrichtung. Beispielsweise kann auch vorgesehen sein, dass der Versatz zumindest teilweise erst während des Mischens aus den Komponenten formuliert wird.

Dem Versatz kann, insbesondere beispielsweise während des Mischens, ein Bindemittel zugegeben werden. Hierzu kann grundsätzlich jedes aus dem Stand der Technik bekannte Bindemittel für gattungsgemäße Versätze verwendet werden, insbesondere beispielsweise organische Bindemittel, beispielsweise eine Fruchtsäure, beispielsweise Citronensäure.

Dem Versatz kann beispielsweise Bindemittel in Massenanteilen im Bereich von 3 bis 10 Masse-% zugegeben werden, bezogen auf 100 % der Masse des Versatzes.

Der mit einem Bindemittel angemachte Versatz kann durch die aus dem Stand der Technik bekannte Technologie zu einem Grünling geformt werden, insbesondere durch Pressen.

Der Grünling kann anschließend, gegebenenfalls nach einer Trocknung in einem Trockenaggregat, durch einen keramischen Brand zu einem feuerfesten Stein gebrannt werden. Der keramische Brand wird bei Temperaturen ausgeführt, bei denen die Komponenten des Versatzes miteinander versintern und hierdurch ein geformtes feuerfestes keramisches Erzeugnis bilden. Beispielsweise kann der Versatz bei Temperaturen im Bereich von wenigstens 1.450°C oder wenigstens 1.500°C und bei Temperaturen von höchstens 1.600°C oder höchstens 1.560°C gebrannt werden.

Nach dem keramischen Brand erhält man ein geformtes feuerfestes keramisches Erzeugnis.

Das erfindungsgemäße geformte feuerfeste keramische Erzeugnis kann insbesondere einen $T_0$-Wert über 1.325°C aufweisen, also einen Wert für das Erweichungsverhalten unter Druck (Druckerweichen) $T_0$ von über 1.325°C. Der Wert für das Druckerweichen kann insbesondere bestimmt sein gemäß DIN EN ISO 1893: 2008-09.

Insbesondere kann das erfindungsgemäße Erzeugnis auch einen solchen $T_0$-Wert über 1.350°C, 1.380°C, 1.400°C, 1.420°C oder auch über 1.440°C aufweisen. Der $T_{0,5}$-Wert für das Druckerweichen, der insbesondere ebenfalls gemäß DIN EN ISO 1893: 2008-09 bestimmt sein kann, kann beispielsweise über 1.500°C, 1.530°C, 1.550°C, 1.570°C, 1.590°C oder auch über 1.600°C liegen.

Das erfindungsgemäße geformte feuerfeste keramische Erzeugnis weist auch eine für den Einsatz ausreichende Gefügeelastizität auf, wobei diese durch wenigstens einen der folgenden, typischen Eigenschaftswerte charakterisiert sein kann:

- Elastizitätsmodul: < 70 GPa, < 60 GPa, < 50 GPa oder 40 GPa
- Nominelle Kerbzugfestigkeit: < 10 MPa, < 9 MPa, < 8 MPa oder < 7 MPa

Der Elastizitätsmodul (E-Modul) kann bestimmt werden bei Raumtemperatur gemäß den Angaben in der folgenden Literaturstelle: G. Robben, B. Bollen, A. Brebels, J van Humbeeck, O. van der Biest: "Impulse excitation apparatus to measure resonant frequencies, elastic module and internal friction at room and high temperature", Review of Scientific Instruments, Vol. 68, pp. 4511-4515 (1997).

Die nominelle Kerbzugfestigkeit kann bestimmt werden bei 1.100°C gemäß den Angaben in der folgenden Literaturstelle: Harmuth H., Manhart Ch., Auer Th., Gruber D.: "Fracture Mechanical Characterisation of Refractories and Application for Assessment and Simulation of the Thermal Shock Behaviour", CFI Ceramic Forum International, Vol. 84, Nr. 9, pp. E80 - E86 (2007).

Das erfindungsgemäße Erzeugnis weist zumindest insbesondere die folgenden Mineralphasen auf:

- Magnesia, sowie
- wenigstens eine der folgenden Phasen: Tricalciumphosphat oder Calcium-Silikat-Phosphat-Mischkristall.

Daneben kann das erfindungsgemäße Erzeugnis noch wenigstens eine der folgenden Phasen aufweisen: Ferrit, Dicalciumsilikat oder wenigstens eine Mineralphase, die sich aus einem oder mehreren Flexibilisierern gebildet hat.

Die Massenanteile an den Mineralphasen im erfindungsgemäßen Erzeugnis, die sich aus dem oder den Flexibilisierern gebildet haben, können den Massenanteilen im erfindungsgemäßen Versatz entsprechen. Soweit Flexibilisierer in Form von Mineralen aus der Spinellgruppe im Versatz vorlagen, liegen diese regelmäßig als entsprechende Mineralphase in dem daraus erstellten Erzeugnis vor, da diese während des keramischen Brandes in der Regel praktisch keine Umwandlung erfahren. Insoweit liegen beispielsweise Flexibilisierer in Form von Spinell, Hercynit, Galaxit oder Jakobsit als entsprechende Mineralphasen im gebrannten Erzeugnis vor.

Der Massenanteil an Dicalciumsilikat im Erzeugnis, bezogen auf die Gesamtmasse des Erzeugnisses, kann beispielsweise im Bereich von 0,5 bis 8 Masse-% liegen, beispielsweise bei mindestens 0,5 %, 0,8 %, 1 % oder 1,5 % und bei höchstens 8 %, 7 %, 6 %, 5 %, 4 % 3 % oder 2,5 %.

Der Massenanteil an Tricalciumphosphat im Erzeugnis, bezogen auf die Gesamtmasse des Erzeugnisses, kann beispielsweise im Bereich von 0,5 bis 6 Masse-% liegen, beispielsweise bei mindestens 0,5 %, 0,8 %, 1 % oder 1,2 % und bei höchstens 6 %, 5 %, 4 % 3 %, 2,5 % oder 2 %.

Der Massenanteil an Calcium-Silikat-Phosphat-Mischkristall im Erzeugnis, bezogen auf die Gesamtmasse des Erzeugnisses, kann beispielsweise im Bereich von 0,5 bis 8 Masse-% liegen, beispielsweise bei mindestens 0,5 %, 0,8 %, 1 % oder 1,5 % und bei höchstens 8 %, 7 %, 6 %, 5 %, 4 % 3 % oder 2,5 %.

Die Massenanteile an der Phase Magnesia im erfindungsgemäßen Erzeugnis können gegebenenfalls geringfügig unter den Massenanteilen an Magnesia im Versatz liegen, da Anteile an CaO und $SiO_2$ aus der Versatz-Komponente Magnesia miteinander sowie mit dem Phosphor der Phosphor umfassenden Komponente während des keramischen Brandes des Versatzes reagiert haben können und dabei insbesondere die vorbezeichneten Mineralphasen aus CaO, $SiO_2$ und Phosphat gebildet haben können. Ferner können eisenoxidische Bestandteile der Magnesia Ferrit gebildet haben. Beispielsweise kann der Massenanteil der Phase Magnesia im erfindungsgemäßen Erzeugnis daher im Bereich von 1,5 bis 10 %, also beispielsweise 3 % unter den oben bezeichneten Massenanteilen an Magnesia im Versatz liegen. Beispielsweise kann Magnesia im Erzeugnis in Massenanteilen im Bereich von 68 bis 94 % im Versatz vorliegen, bezogen auf die Gesamtmasse des Erzeugnisses, also beispielsweise in Anteilen von wenigstens 68 %, 70 %, 72 %, 74 %, 76 %, 78 %, 80 %, 81 % oder 82 % und beispielsweise von höchstens 94 %, 92 %, 90 % oder 88 %.

Ferrit kann im Erzeugnis beispielsweise in Massenanteilen, bezogen auf die Gesamtmasse der Erzeugnisses, im Bereich von 1 bis 6 % vorliegen, beispielsweise in Anteilen von wenigstes 1 %, 1,2 % oder 1,5 % und beispielsweise in Anteilen von höchstens 6 %, 5 %, 4 %, 3 % oder 2,5 %.

Das erfindungsgemäße geformte feuerfeste keramische Erzeugnis kann insbesondere dort verwendet werden, wo geformte feuerfeste keramische Erzeugnisse mit einer hohen Sulfatbeständigkeit eingesetzt werden müssen. Bevorzugt kann das erfindungsgemäße Erzeugnis beispielsweise Verwendung in Öfen der Zementindustrie (insbesondere in Drehrohröfen), in der Glasindustrie (insbesondere zur Verwendung als Gitterstein in Regeneratoren), in der Stahlmetallurgie (insbesondere beispielsweise zur Verwendung in einer Pfanne oder als Dauerfutter) oder beispielsweise in der Nichteisenindustrie (beispielsweise zur Verwendung in Elektroschmelzöfen für Nickel-Kupfer-Legierungen) finden.

Ferner kann das erfindungsgemäße geformte feuerfeste keramische Erzeugnis kann insbesondere dort verwendet werden, wo geformte feuerfeste keramische Erzeugnisse mit einer hohen Hydratationsbeständigkeit eingesetzt werden müssen, beispielsweise in einem Schachtofen, bei dessen Anfahren es zur Bildung von Wasserdampf kommen kann.

Sämtliche der hierin offenbarten Merkmale der Erfindung können, einzeln oder in Kombination, beliebig miteinander kombiniert sein. Nachfolgend wird ein Ausführungsbeispiel für eine Zusammensetzung einer Magnesia angegeben, die in einem erfindungsgemäßen Versatz verwendet werden kann. Die Magnesia-Komponente besteht aus Sintermagnesia. Diese umfasst die jeweils nachfolgend angegebenen Massenanteile an oxidischen Hauptbestandteilen sowie an Nebenbestandteilen, jeweils bezogen auf die Gesamtmasse der Magnesia:

Tabelle 1

| Bestandteil | Magnesia 1 Anteil [%] |
|---|---|
| MgO | 96,39 |
| CaO | 2,10 |

(fortgesetzt)

| Bestandteil | Magnesia 1 Anteil [%] |
|---|---|
| $SiO_2$ | 0,58 |
| $Fe_2O_3$ | 0,24 |
| $Al_2O_3$ | 0,17 |
| Nebenbestandteile | 0,52 |

In der nachfolgenden Tabelle 2 sind mit V1, V2 und V3 drei Ausführungsbeispiele für einen erfindungsgemäßen Versatz angegeben. Mit S1, S2 und S3 sind drei Versätze nach dem Stand der Technik angegeben. Die Versätze weisen die folgenden Komponenten in den folgenden Massenanteilen gemäß auf, jeweils bezogen auf die Gesamtmasse des Versatzes:

Tabelle 2

| Komponente | S1 | V1 | S2 | V2 | S3 | V3 |
|---|---|---|---|---|---|---|
| Magnesia | 100,0 | 98,92 | 99,5 | 98,42 | 98,5 | 97,42 |
| Spinell (Flexibilisierer) | 0,0 | 0,0 | 0,5 | 0,5 | 1,5 | 1,5 |
| Phosphat umfassende Komponente | 0,0 | 1,08 | 0,0 | 1,08 | 0,0 | 1,08 |

Die verwendete Magnesia entspricht der Magnesia gemäß Tabelle 1.

Die Komponenten Magnesia und Spinell liegen jeweils in einer Korngröße im Bereich von > 0 bis 5 mm vor.

Bei der Phosphat umfassenden Komponente handelt es sich um Aluminium-Metaphosphat.

Die sich danach ergebende chemische Zusammensetzung der Versätze V1, V2, V3, S1, S2 und S3 wurde analysiert und ist in Tabelle 3 angegeben. Die Angaben sind jeweils Massenanteile, bezogen auf den jeweilige Versatz:

Tabelle 3

| Oxid | S1 | V1 | S2 | V2 | S3 | V3 |
|---|---|---|---|---|---|---|
| MgO | 96,39 | 95,54 | 96,02 | 95,23 | 95,34 | 94,62 |
| $Al_2O_3$ | 0,17 | 0,14 | 0,51 | 0,49 | 1,22 | 1,20 |
| $SiO_2$ | 0,58 | 0,56 | 0,58 | 0,55 | 0,55 | 0,53 |
| $P_2O_5$ | 0,00 | 0,85 | 0,00 | 0,86 | 0,00 | 0,85 |
| CaO | 2,10 | 2,07 | 2,11 | 2,05 | 2,08 | 2,05 |
| $Fe_2O_3$ | 0,24 | 0,23 | 0,22 | 0,25 | 0,23 | 0,21 |
| Sonstige | 0,52 | 0,61 | 0,56 | 0,57 | 0,58 | 0,54 |

Damit ergeben sich die tatsächlichen folgenden Anteile an Phosphor, berechnet als $P_2O_5$, in den erfindungsgemäßen Versätzen: V1: 0,85 Masse-%; V2: 0,86 Masse-%; V3: 0,85 Masse-%.

Ferner ergibt sich in den erfindungsgemäßen Versätzen V1, V2 und V3 gemäß den Tabellen 2 und 3 jeweils ein Molverhältnis von CaO zu $SiO_2$ von 3,8. Gemäß der oben angegebenen Formel (I) liegen damit die folgenden Massenanteile freies CaO in den erfindungsgemäßen Versätzen vor: V1 und V2: 1,03 Masse-%; V3: 1,06 Masse-%. Der ideale Anteil an Phosphor in den erfindungsgemäßen Versätzen, berechnet als $P_2O_5$ gemäß Formel (II), liegt damit bei 0,87 Masse-% bei V1 und V2 sowie bei 0,90 bei V3. Damit liegt der tatsächliche Anteil an Phosphor jeweils nur 0,02 % unter dem idealen Anteil bei V1 und nur 0,01 % beziehungsweise 0,05 % unter dem idealen Anteil bei V2 undV3. Absolut liegt der ideale Anteil an Phosphor damit nur 2,0 Masse-% unter dem Wert für den idealen Anteil bei V1 und nur 0,71 Masse-% beziehungsweise 5,31 Masse- % unter dem idealen Wert bei V2 und V3.

Ferner ergibt sich in den Versätzen S1, S2 und S3 gemäß den Tabellen 2 und 3 ein Molverhältnis von CaO zu $SiO_2$ von 3,9 für S1 und S2 und von 3,8 für S3.

Nach einem Ausführungsbeispiel eines Verfahrens zur Herstellung eines geformten feuerfesten keramischen Erzeugnisses aus den Versätzen V1, V2 und V3 sowie S1, S2 und S3 gemäß den Tabellen 2 und 3 werden diese Versätze zunächst in einem Mischer gemischt. Gleichzeitig wird den Versätzen Bindemittel in Form von 6 %-iger Citronensäure in einer Masse von 2 %, bezogen auf eine Masse von 100 % des jeweiligen Versatzes, zugegeben. Nach dem Mischen werden die Versätze durch Pressen zu je einem Grünling geformt und anschließend in einem Trocknet bei 95 °C getrocknet. Schließlich werden die Grünlinge nach dem Trocknen bei 1.530°C zu je einem keramischen Erzeugnis gebrannt.

Die danach erhaltenen Erzeugnisse werden als Steine für die Zustellung von Kalkschachtöfen verwendet.

Zur Messung der Sulfatbeständigkeit wurde folgender Test durchgeführt. Zunächst wurden Probenkörper der Erzeugnisse in einem Ofen insgesamt 96 Temperaturzyklen zwischen 800°C und 1.100°C unterworfen, da Alkalisulfate innerhalb dieses Temperaturbereiches in feuerfesten keramischen Erzeugnissen kondensieren. Sowohl die Aufheiz- als auch die Abkühlzeit dauerten jeweils 30 Minuten. Die Beheizung erfolgte über einen Gasbrenner. Als Korrosionsmedium wurden über den Brenner während jedes Aufheizzyklus 250 g $KHSO_4$ als Feststoff und 500 g $SO_2$ als Gas in den Ofen eingeleitet. Dies entspricht rechnerisch einem molaren Verhältnis von $K_2O$ zu $SO_3$ von etwa 0,24 und damit einem sauren Angriff auf das Erzeugnis, das bei einem Verhältnis von $K_2O$ zu $SO_3$ unter 1 vorliegt. Anschließend wurde die chemische Zusammensetzung der erhaltenen Erzeugnisse analysiert. Das Ergebnis dieser chemischen Analyse ist in der nachfolgenden Tabelle 4 angegeben, wobei mit V1, V2 und V3 die Proben des aus den erfindungsgemäßen Versätzen V1, V2 und V3 erhaltenen Erzeugnisses und mit S1, S2 und S3 die Proben des aus den Versätzen S1, S2 und S3 gemäß dem Stand der Technik erhaltenen Erzeugnisses bezeichnet ist. Die Angaben sind wiederum Massenanteile, bezogen auf das jeweilige Erzeugnis:

Tabelle 4

| Oxid | S1 | V1 | S2 | V2 | S3 | V3 |
|---|---|---|---|---|---|---|
| MgO | 88,51 | 88,99 | 88,55 | 88,97 | 87,61 | 88,17 |
| $Al_2O_3$ | 0,16 | 0,13 | 0,47 | 0,46 | 1,12 | 1,12 |
| $SiO_2$ | 0,53 | 0,52 | 0,53 | 0,51 | 0,51 | 0,49 |
| $P_2O_5$ | 0,00 | 0,76 | 0,00 | 0,80 | 0,00 | 0,79 |
| CaO | 1,93 | 1,93 | 1,95 | 1,92 | 1,91 | 1,91 |
| $Fe_2O_3$ | 0,22 | 0,21 | 0,20 | 0,23 | 0,21 | 0,20 |
| $K_2O$ | 2,75 | 2,29 | 2,59 | 2,04 | 2,78 | 2,11 |
| $SO_3$ | 5,47 | 4,50 | 5,21 | 4,39 | 5,42 | 4,57 |
| Sonstige | 0,43 | 0,67 | 0,50 | 0,68 | 0,44 | 0,64 |

Deutlich hat sich insoweit gezeigt, dass Sulfat in die erfindungsgemäßen Erzeugnisse V1, V2 und V3 in wesentlich geringerem Umfang eingetragen ist als in die Erzeugnisse S1. S2 und S3 nach dem Stand der Technik.

Ferner wurden die Erzeugnisse V1 und S1 hinsichtlich ihrer Hydratationsbeständigkeit untersucht. Hierzu wurden aus den Steinen je zwei KDF-Prüfkörper (Zylinder mit 50 mm Durchmesser und 50 mm Höhe) geschnitten und einem Angenottest unterzogen. Dabei wurden die Prüfkörper auf einem Rost etwa 20 cm über kochendem Wasser platziert und mit Dampf beaufschlagt. Anschließend wurden zweimal täglich die Prüfkörper optisch auf Rissbildung untersucht. Dabei wird zwischen Rissen verschiedener Stärke unterschieden, die mit den Ziffern 0 bis 5 bezeichnet sind und für Folgendes stehen:

0 = rissfrei
1 = feine Risse
2 = starke Risse
3 = in Stücke zerfallen
4 = in Körner zerfallen
5 = zu Staub zerfallen

In der nachfolgenden Tabelle 5 ist in Zeile 1 die Zeit angegeben, für die die Proben mit Wasserdampf beaufschlagt wurden. Dabei ist die aus dem erfindungsgemäßen Erzeugnis V1 genommene Probe mit "V1" und die aus dem Erzeugnis S1 nach dem Stand der Technik genommene Probe mit "S1" bezeichnet:

Tabelle 5

| Dauer: | 0 h | 7 h | 10 h | 24 h | 34 h | 48 h | 58 h | 82 h |
|---|---|---|---|---|---|---|---|---|
| V1 | 0 | 0 | 0 | 0 | 1 | 2 | 3 | 4 |
| S1 | 0 | 0 | 0 | 2 | 3 | 4 | 4 | 4 |

Die Hydratationsempfindlichkeit eines erfindungsgemäßen Erzeugnisses V1 ist damit wesentlich verbessert gegenüber einem Erzeugnis S1 gemäß dem Stand der Technik. Dabei zeigen sich bis zu einer Beaufschlagung mit Wasserdampf nach 10 h keine wesentlichen Unterschiede zwischen einem erfindungsgemäßen Erzeugnis und einem Erzeugnis nach dem Stand der Technik. Allerdings zeigen sich bei einem Erzeugnis gemäß dem Stand der Technik bereits nach 24 h starke Risse, wohingegen sich bei einem erfindungsgemäßen Erzeugnis erst nach 34 h feine Risse und nach 48 h starke Risse zeigen.

**Patentansprüche**

1. Feuerfester keramischer Versatz auf Basis Magnesia mit den folgenden Merkmalen:

   1.1 der Versatz umfasst die folgenden Komponenten:

   1.1.1 wenigstens 70 Masse-% Magnesia in Form von Schmelzmagnesia oder Sintermagnesia,
   1.1.2 Flexibilisierer in Form einer oder mehrerer der folgenden Komponenten: Magnesia-Spinell, Hercynit, Galaxit oder Jakobsit in einem Anteil unter 2 Masse-%, sowie
   1.1.3 wenigstens eine Phosphor umfassende Komponente;

   1.2 der Versatz weist Anteile an CaO und an $SeiO_2$ auf, wobei der Molanteil an CaO im Versatz mehr als doppelt so hoch ist wie der Molanteil an $SiO_2$ im Versatz; wobei
   1.3 der Massenanteil an Phosphor im Versatz, berechnet als $P_2O_5$, höchstens 30 % über oder unter dem Wert für einen Massenanteil an $P_2O_5$, berechnet nach der folgenden Formel (I), liegt:

   $$P_2O_{5\ ideal}\ [\%] = (CaO_{frei}) \cdot \frac{b}{a} \tag{I},$$

   wobei $CaO_{frei}$ der freie Anteil an CaO im Versatz in Masse-% gemäß der folgenden Formel (II) ist:

   $$CaO_{frei} = x - \frac{2 \cdot y \cdot c}{s} \tag{II},$$

   mit

   x = Anteil an CaO im Versatz [%],
   y = Gehalt an $SiO_2$ im Versatz [%],
   c = Molgewicht von CaO [g/Mol] = 56 g/Mol,
   s = Molgewicht von $SiO_2$ [g/Mol] = 60,1 g/Mol,
   a = Anteil an CaO in Tricalciumphosphat [%] = 54,2 % und
   b = Anteil an $P_2O_5$ in Tricalciumphosphat [%] = 45,8.

2. Versatz nach Anspruch 1, bei dem die Phosphor umfassende Komponente in solchen Massenanteilen im Versatz vorliegt, dass Phosphor, berechnet als $P_2O_5$, im Bereich von 0,1 bis 5 % im Versatz vorliegt, bezogen auf die Gesamtmasse des Versatzes.

3. Versatz nach wenigstens einem der vorhergehenden Ansprüche, bei dem der Massenanteil an CaO, bezogen auf die Gesamtmasse des Versatzes, im Bereich von 0,2 bis 8 Masse-% liegt.

4. Versatz nach wenigstens einem der vorhergehenden Ansprüche, bei dem der Massenanteil an $SiO_2$, bezogen auf

die Gesamtmasse des Versatzes, im Bereich von 0,05 bis 3 Masse-% liegt.

5. Versatz nach wenigstens einem der vorhergehenden Ansprüche, bei dem der Massenanteil an $Fe_2O_3$, der nicht in Form eines Flexibilisierers im Versatz vorliegt, bezogen auf die Gesamtmasse der Versatzes, über 3 Masse-% liegt.

6. Versatz nach wenigstens einem der vorhergehenden Ansprüche, bei dem der Massenanteil an Magnesia, bezogen auf die Gesamtmasse des Versatzes, im Bereich von 70 bis 97 Masse-% liegt.

7. Versatz nach wenigstens einem der vorhergehenden Ansprüche, bei dem der Massenanteil an Flexibilisierer, bezogen auf die Gesamtmasse des Versatzes, im Bereich von 0,1 bis unter 2 Masse-% liegt.

8. Geformtes feuerfestes keramisches Erzeugnis, das aus einem Versatz nach wenigstens einem der vorhergehenden Ansprüche durch einen keramischen Brand hergestellt ist und das die folgenden Phasen aufweist:

    - Magnesia, sowie
    - wenigstens eine der folgenden Phasen: Tricalciumphosphat oder Calcium-Silikat-Phosphat-Mischkristall.

9. Erzeugnis nach Anspruch 8, bei dem der Massenanteil an Tricalciumphosphat, bezogen auf die Gesamtmasse des Erzeugnisses, im Bereich von 0,5 bis 6 Masse-% liegt.

10. Erzeugnis nach Anspruch 8, bei dem der Massenanteil an Calcium-Silikat-Phosphat-Mischkristall, bezogen auf die Gesamtmasse des Erzeugnisses, im Bereich von 0,5 bis 8 Masse-% liegt.

11. Erzeugnis nach Anspruch 8 mit einem $T_0$-Wert über 1325°C.

12. Erzeugnis nach Anspruch 8 mit wenigstens einer der folgenden physikalischen Eigenschaften:

    - Elastizitätsmodul: < 70 GPa, < 60 GPa oder < 50 GPa;
    - Nominelle Kerbzugfestigkeit: < 10 MPa, < 9 MPa, < 8 MPa oder 7 MPa.

**Claims**

1. A refractory ceramic batch based on magnesia, having the following characteristics:

    1.1 the batch comprises the following components:

        1.1.1 at least 70% by weight magnesia in the form of fused magnesia or sintered magnesia,
        1.1.2 plasticizer in the form of one or more of the following components: magnesia spinel, hercynite, galaxite or jacobsite in an amount of less than 2% by weight, as well as
        1.1.3 at least one phosphorus-comprising component;

    1.2 the batch comprises proportions of CaO and $SiO_2$ wherein the mole fraction of CaO in the batch is more than twice the mole fraction of $SiO_2$ in the batch; wherein
    1.3 the proportion by weight of phosphorus in the batch, calculated as $P_2O_5$, is at most 30% above or below the value for the fraction by weight of $P_2O_5$, calculated in accordance with the following formula (I):

$$P_2O_{5\ ideal}\,[\%] = (CaO_{free}) \cdot \frac{b}{a} \qquad\qquad (I)$$

wherein $CaO_{free}$ is the quantity of free CaO in the batch as a weight %, which is determined using the following formula (II):

$$CaO_{free} = x - \frac{2 \cdot y \cdot c}{s} \qquad\qquad (II)$$

with

x = proportion of CaO in batch [%],
y = $SiO_2$ content in batch [%],
c = molecular weight of CaO [g/mol] = 56 g/mol,
s = molecular weight of $SiO_2$ [g/mol] = 60.1 g/mol,
a = fraction of CaO in tricalcium phosphate [%] = 54.2%, and
b = fraction of $P_2O_5$ in tricalcium phosphate [%] = 45.8%.

2. The batch according to claim 1, in which the phosphorus comprising component is present in such fractions by weight in the batch that phosphorus, calculated as $P_2O_5$, is present in the batch in the range from 0.1% to 5%, with respect to the total weight of the batch.

3. The batch as claimed in at least one of the preceding claims, in which the fraction by weight of CaO is in the range 0.2% to 8% by weight with respect to the total weight of the batch.

4. The batch as claimed in at least one of the preceding claims, in which the fraction by weight of $SiO_2$ is in the range 0.05% to 3% by weight with respect to the total weight of the batch.

5. The batch as claimed in at least one of the preceding claims, in which the fraction by weight of $Fe_2O_3$ which is not present in the batch in the form of a plasticizer is more than 3% by weight with respect to the total weight of the batch.

6. The batch as claimed in at least one of the preceding claims, in which the fraction by weight of magnesia is in the range 70% to 97% by weight with respect to the total weight of the batch.

7. The batch as claimed in at least one of the preceding claims, in which the fraction by weight of plasticizer is in the range 0.1% to less than 2% by weight with respect to the total weight of the batch.

8. A shaped refractory ceramic product which is produced from a batch as claimed in at least one of the preceding claims by ceramic firing and which comprises the following phases:

- magnesia, as well as
- at least one of the following phases: tricalcium phosphate or a calcium-silicate-phosphate solid solution.

9. The product according to claim 8, in which the fraction by weight of tricalcium phosphate is in the range 0.5% to 6% by weight with respect to the total weight of the product.

10. The product according to claim 8, in which the fraction by weight of calcium-silicate-phosphate solid solution is in the range 0.5% to 8% by weight with respect to the total weight of the product.

11. The product according to claim 8, having a $T_0$ value of more than 1325°C.

12. The product according to claim 8, having at least one of the following properties:

- modulus of elasticity: < 70 GPa, < 60 GPa or < 50 GPa,
- nominal notched-bar tensile strength: < 10 MPa, < 9 MPa, < 8 MPa or < 7 MPa.

**Revendications**

1. Composition céramique réfractaire sur base de magnésie, présentant les caractéristiques suivantes :

1.1 la composition comprend les composants suivants :

1.1.1 au moins 70 % en masse de magnésie sous forme de magnésie fondue ou de magnésie frittée,
1.1.2 un flexibilisant sous la forme d'un ou de plusieurs des composants suivants : spinelle de magnésie, hercynite, galaxite ou jacobsite, dans une part inférieure à 2 % en masse, ainsi que
1.1.3 au moins un composant comprenant du phosphore ;

1.2 la composition comporte des parts de CaO et de SiO$_2$, la part molaire de CaO dans la composition correspondant à plus du double de la part molaire de SiO$_2$ dans la composition ;

1.3 la part en masse de phosphore dans la composition, calculée en P$_2$O$_5$, se situant au maximum à 30 % au-dessus ou au-dessous de la valeur pour une part en masse de P$_2$O$_5$, calculée selon la formule (I) suivants :

$$P_2O_{5\,idéal}[\%] = (CaO_{libre}) \cdot \frac{b}{a} \qquad (I),$$

CaO$_{libre}$ étant la part libre de CaO dans la composition en % en masse, selon la formule (II) suivante :

$$CaO_{libre} = x - \frac{2 \cdot y \cdot c}{s} \qquad (II),$$

avec

x = la part de CaO dans la composition [%],
y = la teneur en SiO$_2$ dans la composition [%],
c = le poids molaire de CaO [g/mole] = 56 g/mole
s = le poids molaire de SiO$_2$[g/mole] = 60,1 g/mole,
a = la part de Cao dans du phosphate de tricalcium [%] = 54,2 % et
b = la part de SiO$_2$ dans du phosphate de tricalcium [%] = 45,8.

2. Composition selon la revendication 1, dans laquelle le composant comprenant du phosphore est présent dans la composition dans des parts en masse telles que le phosphore, calculé en tant que P$_2$O$_5$, soit présent dans l'ordre de 0,1 à 5 % dans la composition, en rapport à la masse totale de la composition.

3. Composition selon au moins l'une quelconque des revendications précédentes, dans laquelle la part en masse en CaO, en rapport à la masse totale de la composition se situe dans l'ordre de 0,2 à 8 % en masse.

4. Composition selon au moins l'une quelconque des revendications précédentes, dans laquelle la part en masse de SiO$_2$, en rapport à la masse totale de la composition se situe dans l'ordre de 0,05 à 3 % en masse.

5. Composition selon au moins l'une quelconque des revendications précédentes, dans laquelle la part en masse de Fe$_2$O$_3$ qui n'est pas présente dans la composition sous la forme d'un flexibilisant se situe à plus de 3 % en masse, en rapport à la masse totale de la composition.

6. Composition selon au moins l'une quelconque des revendications précédentes, dans laquelle la part en masse de magnésie en rapport à la masse totale de la composition se situe dans l'ordre de 70 à 97 % en masse.

7. Composition selon au moins l'une quelconque des revendications précédentes, dans laquelle la part en masse de flexibilisant, en rapport à la masse totale de la composition se situe dans l'ordre de 0,1 à moins de 2 % en masse.

8. Produit céramique réfractaire moulé, qui est fabriqué en une composition selon au moins l'une quelconque des revendications précédentes, par une cuisson céramique et qui comporte les phases suivantes :

- magnésie ainsi
- qu'au moins l'une des phases suivantes : phosphate de tricalcium ou cristal mixte de phosphate-silicate-calcium.

9. Produit selon la revendication 8, dans lequel la part en masse de phosphate de tricalcium se situe dans l'ordre de 0,5 à 6 % en masse, en rapport à la masse totale du produit.

10. Produit selon la revendication 8, dans lequel la part en masse de cristal mixte de phosphate-silicate-calcium se situe dans l'ordre de 0,5 à 8 % en masse, en rapport à la masse totale du produit.

11. Produit selon la revendication 8, avec une valeur T$_0$ supérieure à 1325 °C.

**12.** Produit selon la revendication 8, avec au moins l'une des propriétés physiques suivantes :

- module d'élasticité : < 70 GPa, < 60 GPa ou < 50 GPa ;
- résistance nominale à la traction de barreaux entaillés : < 10 MPa, < 9 MPa, < 8 MPa ou < 7 MPa.

EP 2 998 281 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4403869 C2
- DE 19859372 C1
- EP 0248171 A1
- GB 1503278 A
- GB 1118073 A

**In der Beschreibung aufgeführte Nicht-Patentliteratur**

- **CLAUDE ALLAIRE et al.** Basic Phosphate-Bonded Castables from Dolomitic-Magnesite Clinkers. *JOURNAL OF THE AMERICAN CERAMIC SOCIETY,* 01. September 1989, vol. 72 (9), 1698-1703
- **G. ROBBEN ; B. BOLLEN ; A. BREBELS ; J VAN HUMBEECK ; O. VAN DER BIEST.** Impulse excitation apparatus to measure resonant frequencies, elastic module and internal friction at room and high temperature. *Review of Scientific Instruments,* 1997, vol. 68, 4511-4515
- **HARMUTH H. ; MANHART CH. ; AUER TH. ; GRUBER D.** Fracture Mechanical Characterisation of Refractories and Application for Assessment and Simulation of the Thermal Shock Behaviour. *CFI Ceramic Forum International,* 2007, vol. 84 (9), E80-E86